# EUROPEAN PATENT SPECIFICATION

(11) **EP 0 706 497 B1**
(45) Date of publication and mention of the grant of the patent: **22.07.1998**
(21) Application number: 95915347.9
(22) Date of filing: 02.03.1995
(51) Int. Cl.: C01B 33/037, C07F 7/16

(54) **METHOD FOR UPGRADING OF SILICON-CONTAINING RESIDUES OBTAINED AFTER LEACHING OF COPPER-CONTAINING RESIDUES FROM CHLOROSILANE SYNTHESIS**
VERFAHREN ZUR WERTSTEIGERUNG VON SILICIUM ENTHALTENDEN RÜCKSTÄNDEN ERHALTEN NACH DEM AUSLAUGEN VON KUPFER ENTHALTENDEN RÜCKSTÄNDEN AUS DER CHLORSILAN SYNTHESE
PROCEDE DE VALORISATION DE RESIDUS RENFERMANT DU SILICIUM ET RESULTANT DE LA LIXIVIATION DE RESIDUS RENFERMANT DU CUIVRE PRODUITS PAR LA SYNTHESE DE CHLOROSILANES

(30) Priority: 30.03.1994 NO 941174
(43) Date of publication of application: 17.04.1996
(73) Proprietor: Elkem ASA, 0377 Oslo (NO)
(72) Inventor: EIKELAND, Inger, Johanne, N-0493 Oslo (NO); GUNDERSEN, Roald, N-4700 Vennesla (NO); JENSEN, Ragnhild, N-4635 Kristiansand (NO)
(74) Representative: Rees, David Christopher
(86) International application number: NO9500046
(87) International publication number: WO9526926

(56) References cited:
- EP-A- 141 125
- EP-A- 287 934
- DE-A- 3 201 312
- DE-A- 4 205 980

## Description

### Technical Field

The present invention relates to a method for upgrading residues from methylchlorosilane synthesis, where silicon is reacted with methylchloride in the presence of a copper catalyst and residues from chlorosilanesynthesis, where silicon is reacted with hydrogenchloride.

### Background Art

Methylchlorosilane synthesis, also called direct synthesis, is carried out in fluidized bed reactors. During the process a part of fine particulate silicon and copper catalyst particles are together with metallic compounds, especially iron- and aluminium compounds, which are present in the silicon raw material, removed from the reactor together with the gaseous reaction products, a mixture of silanes, and unreacted methylchloride. The solid materials are separated from the mixture of silanes and unreacted methylchloride in separating devices such as for example cyclones. In addition a residue will remain in the reactor, comprising silicon, copper and metal halides formed from compounds in the silicon raw materials and also comprising carbon deposits formed by decomposition of methylchloride. This residue is continuously or intermittently removed from the reactor.

As copper catalyst it is used elemental copper, copper oxides, copper formate, copper hydroxides and other copper salts like copper chloride. The copper catalyst may further contain metals or metal compounds as activators, such as zinc, and zinc compounds, or promotors such as antimon, cadmium, phosphorus, tin, arsenic etc. in order to improve the reactivity and the selectivity of the produced silanes.

These residues have up till now normally been deposited on waste disposal sites. However, as the residues normally contain 1 - 10 % by weight of copper, mainly in elemental form, copper may be leached from the residue which represents a danger for pollution of ground water. It is therefore no longer acceptable to deposit this type of residue on disposal sites.

A number of methods for recovering copper from the above mentioned residues have been proposed. Thus from German patent No. 901889 it is known to treat residue from the reactor in water and diluted hydrochloric acid under addition of chlorine gas in order to leach copper as divalent copper chloride and remove the remaining solid residue from the solution whereafter divalent copper chloride in the leach solution is reduced to cuprous chloride which are crystallized and used as a copper catalyst in the direct synthesis. The remaining solid residue, which mainly contains silicon must, however, be deposited. In addition it is difficult to obtain a complete crystallization of coprous chloride from the leach solution, making it necessary to subject the final solution to further treatment.

From DE-A1 3523541 it is known a method for treatment of a hydrolysis residue from organochlorosilane production, where the residue is oxidized by sodium hypochlorite in order to leach copper from the residue. After removal of the solids from the leach solution, an alkaline earth- or alkaline hydroxide or an alkaline carbonate are added in order to precipitate copper oxides, hydroxides or carbonates. Also in this process the undissolved solid material which mainly contains silicon, is deposited.

In US patent No. 4,758,352 it is proposed to oxidize hydrolysis residue by using an oxygen containing gas. Also in this process only copper is recovered, while a silicon containing residue is deposited.

In DE-A 4205980 it is proposed to treat residue from direct synthesis by diluted sulphuric acid at elevated temperatures in order to dissolve copper and where copper can be precipitated as for example cuprous chloride or as copper-II-oxalat or where copper can be recovered by electrolysis. It is further disclosed in DE-A 4205980 that it is obtained a solid silicon residue which can be used in metallurgical process or which can be deposited. Chemical analysis of the obtained silicon residue is, however, not given.

By all the above-mentioned processes the residues are subjected to a leaching process in order to dissolve and recover copper while the undissolved solid matter is normally deposited. This undissolved matter does, however, contain a substantial amount of silicon which is not recovered.

### Disclosure of Invention

It is an object of the present invention to provide a method for upgrading silicon-containing solid residues obtained after leaching of copper from copper-containing residues from direct synthesis of organoclorosilanes whereby a silicon-containing product can be recovered and whereby an inert slag can be produced and can be used as a filler material and can be deposited without restrictions. By an inert slag it is understood a material which satisfies the requirements set to an inert material in Review of Regulatory Situation on Waste at EC and OECD levels, published February 1993.

Accordingly, the present invention relates to a method according to appended claim 1 for upgrading silicon-containing solid residues obtained after leaching of copper from copper-containing residues from direct synthesis of organochlorosilanes, said method being characterized in that the solid residue, optionally together with an oxidation agent is supplied to a smelting furnace where the residues are melted and form a molten metallic phase substantially containing silicon and a calcium silicate slag and tapping of the molten metallic phase and an inert slag from the smelting furnace.

According to a preferred embodiment the residues are dried and agglomerated before they are supplied to the smelting furnace. The agglomeration is carried out by conventional methods such as for example pelletizing using a suitable binder. Alternatively the residues can be supplied to the smelting furnace in powder form by injection through a hollow electrode or by injection through a lance or through nozzles arranged in the furnace bottom or in the furnace body. When the residues are supplied through a hollow electrode or injected through lances or nozzles directly into the molten bath, the residues can either be in powder form or agglomerated form.

If necessary CaO, SiO₂ or Al₂O₃ are added as slag forming materials in order to produce a calcium silicate or a calcium aluminate silicate slag which is liquid at the temperature in the smelting furnace and is inert after solidification. The basicity of the slag defined for example as weight ratio CaO/SiO₂ is preferably adjusted within the range of 0.5 to 3.0.

The smelting process may be carried out in plasma heated furnaces or in furnaces equipped with graphite- or carbon electrodes. The current supply can be direct current or alternate current. Both open, semi-closed or closed smelting furnaces can be used. The use of a closed smelting furnace gives, however, the best control of gas production. This may be an advantage as to amount of gas and to avoid outlet of dioxine to the environment.

As oxidizing agent a metal oxide or an oxygen containing gas can be used. The purpose of the supply of an oxidation agent is to oxidize any elemental carbon present in the residue.

According to a preferred embodiment, an iron oxide source is added as oxidation agent to the smelting furnace in an amount sufficient to oxidize elemental carbon present in the residue. In this case the molten metallic phase will, in addition to silicon and copper, contain iron which during the solidification of the metallic phase will form a FeSi₂ intermetallic phase.

During the smelting of the residue some amorphous silica dust will be formed which will follow the off gas from the furnace. This silica dust can be recovered from the off gas in for example a bag house filter and can be used as a binder for producing agglomerates of the residue or it can be used as an additive in the production of concrete and mortar. Alternatively the gas can be cleaned by wet cleaning, whereby the amorphous silica can be recovered in form of a liquid slurry.

By the method according to the present invention silicon or a silicon-iron alloy is obtained which can be used as an additive in the production of steel or cast iron or as a reduction agent in silicothermic production of metals or metal alloys. The inert slag can be used as a filler material or it can be deposited.

### EXAMPLE

A solid residue obtained after leaching of copper from a copper-containing residue for organochlorosynthesis was agglomerated using a binder which, based on the weight of the agglomerates, consisted of 2 % by weight of amorphous silica fume, 3 % by weight of slaked lime, 2 % by weight of an aqueous sugar solution and water in an amount of up to 17 % by weight. Agglomerates having a composition as shown in Table 1 was melted in a smelting furnace equited with a plasma burner.

**TABLE 1**

| Composition of agglomerated solid residue. | |
|---|---|
| **Element** | **Weight %** |
| Fe | 1.7 |
| Zn | 0.01 |
| Cu | 0.3 |
| Mn | 0.03 |
| Cr | 0.01 |
| Ti | 0.13 |
| Ca | 1.2 |
| Al | 0.33 |
| Mg | 0.02 |
| C | 4.8 |
| Cl | 1.13 |
| Si | 78.6 |
| Remainder | Oxygen |

Before the solid residue was supplied to the smelting furnace, it was established a start melt in the furnace comprising silicon and a slag consisting of about 55 % by weight of CaO and about 45 % by weight of SiO₂.

The solid residue was together with CaO and SiO₂ as slagforming material and Fe₂O₃ as oxidation agent supplied to the slag bath. The purpose of the addition of Fe₂O₃ was to consume free carbon in the solid residue by reduction of Fe₂O₃ to Fe.

From the smelting furnace it was tapped a silicon-iron alloy and a calcium silicate slag. The chemical analysis of the produced silicon-iron alloy is shown in Table 2. The silicon-iron alloy can for example be used as an additive in steel and cast iron production or as a reduction agent in silicothermic production of metals and metal alloys.

**TABLE 2**

| Composition of Si-Fe (Cu)-alloy. | |
|---|---|
| **Element** | **Weight %** |
| Al | 0.50 |
| Ca | 1.4 |
| Ti | 0.14 |
| Fe | 9.9 |
| Cu | 0.4 |
| Si | 86.0 |
| O₂ | < 1.0 |

The off-gas from the smelting furnace was cleaned in a wet cleaning apparatus. From the wet cleaning apparatus it was recovered a sludge consisting essentially of SiO₂.

The chemical analysis of the solidified calcium aluminate slag is shown in Table 3. This kind of slag fullfills the requirements set to an inert material stated in Review of Regulatory Situation on Waste at EC and OECD levels, published February 1993.

**TABLE 3**

| Composition of slag. | |
|---|---|
| | **Weight %** |
| CaO | 56.4 |
| FeO | 2.9 |
| MgO | < 0.01 |
| TiO₂ | 0.04 |
| MnO | 0.03 |
| ZnO | 0.011 |
| PbO | < 0.01 |
| SiO₂ | 39.5 |
| Al₂O₃ | 1.2 |

## Claims

1. A method for up-grading silicon-containing solid residues obtained after leaching of copper from copper-containing residues from the direct synthesis of organochlorosilanes, characterised by: supplying to a smelting furnace the solid residues, optionally together with an oxidation agent; melting the residues in the smelting furnace to form a molten metallic phase substantially containing silicon and a calcium silicate slag; and tapping off the molten metallic phase and the (inert) calcium silicate slag from the smelting furnace.

2. A method as claimed in Claim 1, characterised in that the residue is dried and agglomerated before it is supplied to the furnace.

3. A method as claimed in Claim 1, characterised in that the residue is supplied to the smelting furnace in powder form by injection through a hollow electrode or by injection into the melt by means of a lance or through nozzles arranged in the smelting furnace.

4. A method as claimed in any preceding Claim, characterised in that CaO and/or SiO₂ and/or Al₂O₃ are added as slag forming materials in order to produce a liquid slag.

5. A method as claimed in any preceding Claim, characterised in that the basicity, defined as the weight ratio CaO/SiO₂, is adjusted to within the range of 0.5 to 3.0.

6. A method as claimed in any preceding Claim, characterised in that a metal oxide or an oxygen containing gas is added as an oxidising agent.

7. A method as claimed in Claim 6, characterised in that iron oxide is added as the oxidising agent.

## Patentansprüche

1. Verfahren zur Verbesserung Si-enthaltender fester Rückstände, die nach dem Auslaugen von Kupfer aus Cu-enthaltenden Rückstähden der Direkt-Synthese von Organochlorsilanen erhalten worden sind, dadurch gekennzeichnet, daß die festen Rückstände, gegebenenfalls zusammen mit einem Oxidationsmittel, einem Schmelzofen zugeführt werden, in dem die Rückstände unter Bildung einer geschmolzenen metallischen Phase geschmolzen werden, die im Wesentlichen Silicium und eine Calciumsilicatschlacke enthält, und die geschmolzene metallische Phase sowie die (inerte) Calciumsilicat-schlacke aus dem Schmelzofen abgelassen werden.

2. Verfahren nach Anspruch 1, dadurch gekennzeichnet, daß der Rückstand vor der Zuführung in den ofen getrocknet und agglomeriert wird.

3. Verfahren nach Anspruch 1, dadurch gekennzeichnet, daß der Rückstand dem Schmelzofen in Pulverform durch Injektion durch eine Hohlelektrode oder durch Injektion mittels einer Blaslanze oder durch in dem Schmelzofen angeordnete Düsen in die Schmelze injiziert wird.

4. Verfahren nach einem der vorhergehenden Ansprüche, gekennzeichnet durch den Zusatz von CaO und/oder SiO₂ und/oder Al₂O₃ als Schlackenbildende Materialien, um eine flüssige Schlacke zu bilden.

5. Verfahren nach einem der vorhergehenden Ansprüche, dadurch gekennzeichnet, daß die als Gewichtsverhältnis von CaO/SiO₂ definierte Basizität so eingestellt wird, daß sie im Bereich von 0,5-3,0 liegt.

6. Verfahren nach einem der vorhergehenden Ansprüche, dadurch gekennzeichnet, daß ein Metalloxid oder ein Sauerstoff-enthaltendes Gas als Oxidationsmittel zugeführt wird.

7. Verfahren nach Anspruch 6, dadurch gekennzeichnet, daß Eisenoxid als Oxidationsmittel zugesetzt wird.

## Revendications

1. Procédé de valorisation de résidus solides contenant du silicium obtenus après lixiviation du cuivre à partir de résidus contenant du cuivre, provenant de la synthèse directe des organochlorosilanes,
caractérisé en ce que :
on introduit dans un haut fourneau les résidus solides, facultativement avec un agent oxydant ; on fait fondre les résidus dans le haut fourneau pour former une phase métallique fondue contenant sensiblement du silicium et un laitier de silicate de calcium ; et on fait couler la phase métallique fondue et le laitier de silicate de calcium (inerte) du haut fourneau.

2. Procédé selon la revendication 1,
caractérisé en ce qu'
on sèche et en ce qu'on agglomère le résidu avant de l'introduire dans le haut fourneau.

3. Procédé selon la revendication 1,
caractérisé en ce qu'
on introduit le résidu dans le haut fourneau sous forme de poudre par injection à travers une électrode creuse ou par injection dans la masse fondue au moyen d'une lance ou de buses disposées dans le haut fourneau.

4. Procédé selon l'une quelconque des revendications précédentes,
caractérisé en ce qu'
on ajoute CaO et/ou SiO₂ et/ou Al₂O₃ comme matériaux formant laitier afin de produire un laitier liquide.

5. Procédé selon l'une quelconque des revendications précédentes,
caractérisé en ce qu'
on ajuste la basicité, définie comme le rapport pondéral CaO/SiO₂, dans un intervalle de 0,5 à 3,0.

6. Procédé selon l'une quelconque des revendications précédentes,
caractérisé en ce qu'
on ajoute comme agent oxydant un oxyde métallique ou un gaz contenant de l'oxygène.

7. Procédé selon la revendication 6,
caractérisé en ce qu'
on ajoute de l'oxyde de fer comme agent oxydant.
